# EUROPEAN PATENT APPLICATION

(11) **EP 4 742 741 A1**
(43) Date of publication of application: **13.05.2026**
(21) Application number: 25806644.8
(22) Date of filing: 28.03.2025
(51) Int. Cl.: H04W 28/02, H04W 28/24

(54) **DATA TRANSMISSION METHOD, AND DEVICE, READABLE STORAGE MEDIUM AND PROGRAM PRODUCT**

(30) Priority: 22.05.2024 CN 202410642803
(71) Applicant: Huawei Technologies Co., Ltd., Shenzhen, Guangdong 518129 (CN)
(72) Inventor: YANG, Lin, Shenzhen, Guangdong 518129 (CN); HAN, Yaohui, Shenzhen, Guangdong 518129 (CN); PENG, Yicheng, Shenzhen, Guangdong 518129 (CN); KANG, Jianchi, Shenzhen, Guangdong 518129 (CN); WANG, Weigang, Shenzhen, Guangdong 518129 (CN); PENG, Xiaolin, Shenzhen, Guangdong 518129 (CN); MA, Liqiang, Shenzhen, Guangdong 518129 (CN)
(74) Representative: Grünecker Patent- und Rechtsanwälte PartG mbB
(86) International application number: PCT/CN2025/085796
(87) International publication number: WO 2025/241705

(57) **Abstract**

This application discloses a data transmission method, a device, a readable storage medium, and a program product, and relates to the field of terminal technologies. In this application, when the device receives a data packet of a service of a first service type, if a QoS control function corresponding to the first service type is already set by a user to an enabled state, and a currently used APN includes a first APN allocated for the first service type, the device determines a first dedicated bearer corresponding to the first APN, and performs transmission of the data packet on the first dedicated bearer. It can be learned that, in this application, the user determines whether to perform QoS control on a service of a type. When the user determines to perform QoS control on a service of a service type, the device performs transmission of data of the service of the service type on a dedicated bearer for a dedicated APN corresponding to the service type, to guarantee quality of service of the service of the service type, achieve user-intention-based QoS guarantee, and improve user experience.

## Description

This application claims priority to Chinese Patent Application No. 202410642803.0, filed with the China National Intellectual Property Administration on May 22, 2024 and entitled "DATA TRANSMISSION METHOD, DEVICE, READABLE STORAGE MEDIUM, AND PROGRAM PRODUCT", which is incorporated herein by reference in its entirety.

### TECHNICAL FIELD

This application relates to the field of terminal technologies, and in particular, to a data transmission method, a device, a readable storage medium, and a program product.

### BACKGROUND

Currently, devices such as smartphones and tablet computers may be connected to a network via customer premises equipment (customer premises equipment, CPE). A quantity of devices connected to the CPE is usually large, and requirements of services run on different devices may vary. For example, services run on some devices require low data transmission latency. For another example, services run on some devices require large transmission bandwidth. In view of this, how to guarantee a requirement of a service of a device connected to the CPE is an urgent problem to be resolved.

### SUMMARY

This application provides a data transmission method, a device, a readable storage medium, and a program product, to achieve QoS guarantee of a service of a specified service type based on user selection, and improve user experience.

To achieve the foregoing objective, this application uses the following technical solutions.

According to a first aspect, a data transmission method is provided, which is applied to a device. The method includes: receiving a first data packet, where a service type of a first service to which the first data packet belongs is a first service type; if a quality of service (quality of service, QoS) control function corresponding to the first service type is in an enabled state, and a currently used access point name (access point name, APN) includes a first APN, determining a first dedicated bearer corresponding to the first APN, where the first APN is an APN allocated to a service of the first service type, and the enabled state of the QoS control function is preset by a user; and performing transmission of the first data packet on the first dedicated bearer. It should be understood that the device includes but is not limited to CPE.

The first service type may be a latency-first type or a bandwidth-first type. The latency-first means that there is a high latency requirement, and the bandwidth-first means that there is a high bandwidth requirement. The latency-first type may include game, conference, real-time video, and the like. The bandwidth-first type may include video download, large file download, and the like. Correspondingly, the first service type may alternatively be any one of the foregoing latency-first types, or any one of the foregoing bandwidth-first types.

Optionally, the method further includes: receiving a second data packet, where a service type of a second service to which the second data packet belongs is a second service type, and the second service type is different from the first service type; if a quality of service QoS control function corresponding to the second service type is in an enabled state, and the currently used access point name APN includes a second APN, determining a second dedicated bearer corresponding to the second APN, where the second APN is an APN allocated to a service of the second service type; and performing transmission of the second data packet on the second dedicated bearer.

The second service type is different from the first service type. For example, the first service type is a latency-first type, and the second service type is a bandwidth-first type; or the first service type and the second service type are different types included in the latency-first type or the bandwidth-first type. For example, the first service type is the game, and the second service type is the conference.

In this application, when a data packet of the service of the first service type is received, if the QoS control function corresponding to the first service type is already set by the user to the enabled state, and a currently used APN is the first APN allocated to the first service type, the first dedicated bearer corresponding to the first APN may be determined, and transmission of the data packet is performed on the first dedicated bearer. It can be learned that, in this embodiment of this application, the user may determine whether to perform QoS control on a service of a type. When the user determines to perform QoS control on a service of a type, transmission of data of the service of the type is performed on a dedicated bearer for a dedicated APN corresponding to the service type, to guarantee quality of service of the service of the type, achieve user-intention-based QoS guarantee, and improve user experience.

Optionally, before receiving the first data packet, the method further includes: when detecting that the QoS control function corresponding to the first service type is enabled, performing detection of whether the currently used APN includes the first APN; and if the currently used APN does not include the first APN, establishing a packet data network (packet data network, PDN) connection by using the first APN.

In this application, the first APN is an APN allocated to the service of the first service type, that is, the first APN is an APN customized for the service of the first service type. In view of this, when it is detected that the QoS control function corresponding to the first service type is enabled, detection of whether the PDN connection is successfully established by using the customized APN of the first service type may be performed. Only when the PDN connection is successfully established, a dedicated bearer in the PDN connection may be used to perform transmission of the data packet of the service corresponding to the first service type. It can be learned that, in this application, a dedicated bearer corresponding to a customized APN of a specified service type is used to perform transmission of data of a service of a corresponding service type, to guarantee quality of service of the service of the type.

Optionally, an implementation process of the determining the first dedicated bearer corresponding to the first APN may include: if the first APN corresponds to a first filter rule set, performing detection of whether the first filter rule set includes a first filter rule, where the first filter rule is used for causing the first data packet to pass, and the first filter rule set corresponds to a dedicated bearer; and if the first filter rule set includes the first filter rule, determining, as the first dedicated bearer, the dedicated bearer corresponding to the first filter rule set.

In this application, the first filter rule set is a filter rule set used for mapping the data packet of the first service to the first dedicated bearer. If the first APN corresponds to the first filter rule set, it indicates that a bearer corresponding to the first APN includes the first dedicated bearer used for performing transmission of the data packet of the first service. In view of this, if the first filter rule set further includes the first filter rule used for causing the first data packet to pass, the first data packet may be directly mapped, by using the first filter rule set, to the dedicated bearer corresponding to the first filter rule set.

Optionally, the method further includes: if the first filter rule set does not include the first filter rule, updating the first filter rule set based on the first data packet, where an updated first filter rule set includes the first filter rule; and determining, as the first dedicated bearer, a dedicated bearer corresponding to the first filter rule set.

The first filter rule set is a filter rule set used for mapping the data packet of the first service to the first dedicated bearer. Therefore, if the first filter rule set does not include the first filter rule for causing the first data packet of the first service to pass, the first filter rule set may be refreshed based on the first data packet, so that the data packet of the first service can be mapped, by using the first filter rule set, to the corresponding dedicated bearer for transmission.

Optionally, the determining the first dedicated bearer corresponding to the first APN includes: if the first APN does not correspond to a first filter rule set, configuring the first filter rule set for the first APN based on the first data packet, and configuring corresponding first QoS information for the first filter rule set, where the first filter rule set includes a first filter rule, the first filter rule is used for causing the first data packet to pass, and the first QoS information includes a QoS parameter of the service of the first service type; and creating the first dedicated bearer corresponding to the first filter rule set.

If the first APN does not have a corresponding first filter rule set, it indicates that a bearer corresponding to the first APN does not include the first dedicated bearer used for performing transmission of the data packet of the first service. In this case, the first filter rule set may be generated, the corresponding first QoS information may be configured for the first filter rule set, and then the first dedicated bearer corresponding to the first filter rule set is created. In this way, subsequently, the data packet of the first service can be mapped to the corresponding first dedicated bearer by using the first filter rule set, and performing transmission of the data packet on the first dedicated bearer can be controlled based on the corresponding first QoS information, to implement QoS control on the first service.

Optionally, an implementation process of the creating the first dedicated bearer corresponding to the first filter rule set may include: sending a dedicated-bearer resource allocation request to a network device, where the dedicated-bearer resource allocation request includes the first APN, the first filter rule set, and the first QoS information; receiving dedicated-bearer configuration information from the network device; and activating the first dedicated bearer based on the dedicated-bearer configuration information.

The network device may be a radio access network device, for example, a base station. In other words, in this application, the radio access network device may be actively requested to allocate a resource to the first dedicated bearer, and then the first dedicated bearer is activated based on configuration information fed back by the radio access network device.

Optionally, the method further includes: if detecting that a service status of the first service is an end state, deleting the first filter rule in the first filter rule set.

In this application, if it is detected that the first service ends, the first filter rule used for causing the data packet of the first service to pass may be deleted, to reduce occupied resources.

Optionally, the method further includes: if the first filter rule set does not include a filter rule, deleting the first filter rule set, and releasing the first dedicated bearer.

If the first filter rule set no longer includes the filter rule, that is, the first filter rule set is empty, it indicates that services that need to use the first dedicated bearer to perform transmission of data ends currently. In this case, the first filter rule set may be deleted and the first dedicated bearer may be released, to reduce occupied device storage resources and network resources, reduce device power consumption, and improve resource utilization.

Optionally, the method further includes: when detecting that the QoS control function corresponding to the first service type is disabled, deleting the first filter rule set, and releasing the first dedicated bearer.

In this embodiment of this application, the QoS control function of the first service type may be disabled based on user intention, to release the corresponding first dedicated bearer, so as to improve user experience.

According to a second aspect, a device is provided. The device includes a processor, and the processor is configured to execute at least one program instruction or code stored in a memory, to implement the data transmission method according to the first aspect.

According to a third aspect, a readable storage medium is provided. The readable storage medium stores instructions, and when the instructions are run on a device, the device is caused to perform the data transmission method according to the first aspect.

According to a fourth aspect, a program product including instructions is provided. When the program product is run on a device, the device is caused to perform the data transmission method according to the first aspect.

Technical effects obtained in the second aspect to the fourth aspect are similar to technical effects obtained through corresponding technical means in the first aspect. Details are not described herein again.

### BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a diagram of still another communication system according to an embodiment of this application;
FIG. 4 is a diagram of a software architecture of CPE according to an embodiment of this application;
FIG. 5 is a diagram of a structure of a device according to an embodiment of this application;
FIG. 6 is a flowchart of enabling a QoS control function of a first service type according to an embodiment of this application;
FIG. 7 is a diagram in which a user enables a QoS control function of a conference service on a conference interface according to an embodiment of this application;
FIG. 8 is an example flowchart of enabling a QoS control function of a game service according to an embodiment of this application;
FIG. 9 is a flowchart of a data transmission method according to an embodiment of this application;
FIG. 10 is a flowchart of implementation of determining a first dedicated bearer corresponding to a first APN according to an embodiment of this application;
FIG. 11 is a flowchart of implementation of releasing a first dedicated bearer according to an embodiment of this application;
FIG. 12 is another flowchart of implementation of releasing a first dedicated bearer according to an embodiment of this application; and
FIG. 13A and FIG. 13B are an example flowchart in which software modules in CPE interacts with each other to implement data transmission of a game service according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described in detail, an application scenario in embodiments of this application is first described.

With the development of internet services, users have increasingly high requirements on network quality. However, in some areas with sparse population distribution, deployment costs of radio access network devices (for example, base stations) are high. As a result, a distance between two adjacent base stations is large. In this case, to guarantee network quality, CPE may be disposed near a residential place of a user in the area, so that a nearby device may access a network through connection to the CPE.

A quantity of devices connected to the CPE is usually large, and requirements of services run on different devices may vary. For example, services run on some devices require low data transmission latency, for example, a game service, a real-time video service, and a conference service. For another example, services run on some devices require large transmission bandwidth, for example, downloading a large file. In view of this, embodiments of this application provide a data transmission method, to guarantee a requirement of a service of a device connected to the CPE, thereby improving user experience.

The following describes an implementation architecture in embodiments of this application.

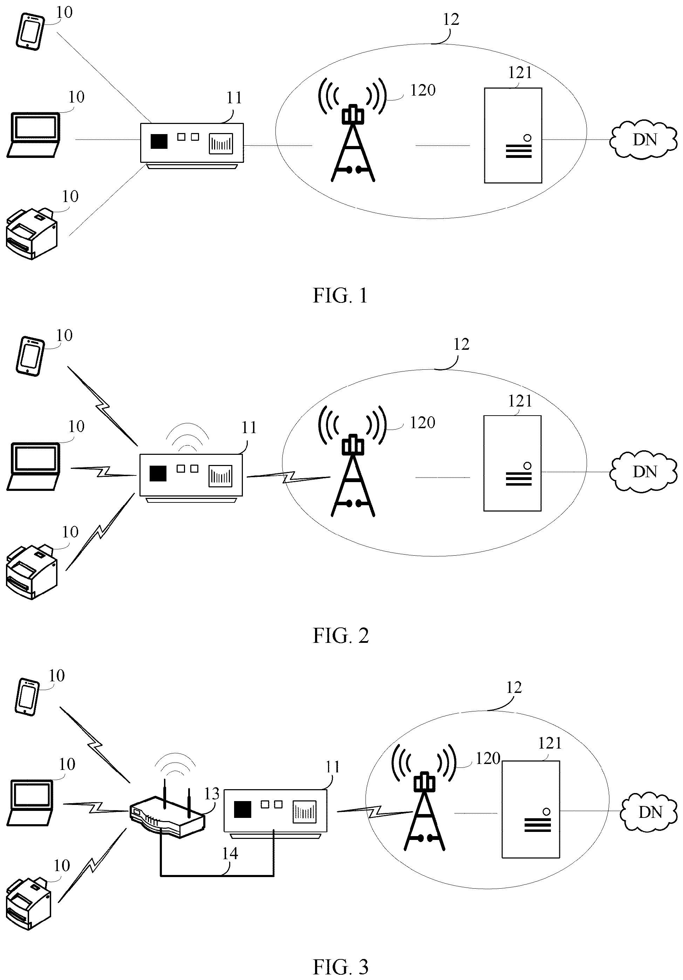

FIG. 1 is a diagram of a communication system to which a data transmission method is applied according to an embodiment of this application. As shown in FIG. 1, the communication system may include devices 10, CPE 11, and a cellular network 12. The device 10 establishes a communication connection to the CPE 11, and the CPE 11 establishes a communication connection to the cellular network 12.

In a possible scenario, the device 10 may communicate with the CPE 11 over a wireless local area network (wireless local area network, WLAN). In this case, refer to FIG. 2. After receiving a cellular signal from the cellular network 12, the CPE 11 may convert the cellular signal into a Wi-Fi signal, and provide a Wi-Fi hotspot, to provide a network service for the device 10 accessing the Wi-Fi hotspot.

In another possible scenario, the device 10 may communicate with the CPE 11 over Ethernet. In this case, refer to FIG. 3. The device 10 may be connected to the CPE 11 via a router 13. After receiving a cellular signal from the cellular network 12, the CPE 11 may convert the cellular signal into an Ethernet signal, and send the Ethernet signal to the router 13 through an Ethernet cable 14, to provide a network service for the accessed device 10 via the router 13.

It should be noted that, in this embodiment of this application, the device 10 may also be referred to as a terminal, user equipment, or the like. The device 10 may be a smartphone, a tablet computer, a personal computer, a wearable device, a smart home device, or the like.

The CPE 11 may be a router or a relay device provided with a subscriber identity module (subscriber identity module, SIM) card or an embedded SIM (embedded SIM, eSIM) card, another router, or the like. Alternatively, the CPE 11 may be a device having a router function, for example, a smartphone or a tablet computer.

The cellular network 12 may be a global system for mobile communications (global system for mobile communications, GSM), a 3rd generation (3rd generation, 3G) communication network, a long term evolution (long term evolution, LTE) communication network, a 5th generation mobile communication technology (5th generation mobile network, 5G) network, a future communication network, or the like.

The cellular network 12 may include a radio access network (radio access network, RAN) and a core network (core network, CN). The RAN may include at least one RAN node 120, and the CN may include at least one core network element 121. The CPE 11 may be connected to the RAN node 120 in a wireless manner. The RAN node 120 may be connected to the core network element 121 in a wireless or wired manner. The core network element 121 may communicate with an external data network (data network, DN). For example, the DN may be the Internet.

The RAN node 120 may also referred to as a radio access network device, a RAN entity, or an access node, and is configured to help the CPE 11 access the communication system in a wireless manner.

In an application scenario, the RAN node 120 may be a base station (base station), an evolved NodeB (evolved NodeB, eNodeB), a transmission reception point (transmission reception point, TRP), a next generation NodeB (next generation NodeB, gNB) in a 5G communication system, or a base station in a future mobile communication system.

In another application scenario, a plurality of RAN nodes may cooperate to help the CPE implement radio access, and different RAN nodes separately implement some functions of the base station. For example, the RAN node may be a central unit (central unit, CU), a distributed unit (distributed unit, DU), or a radio unit (radio unit, RU).

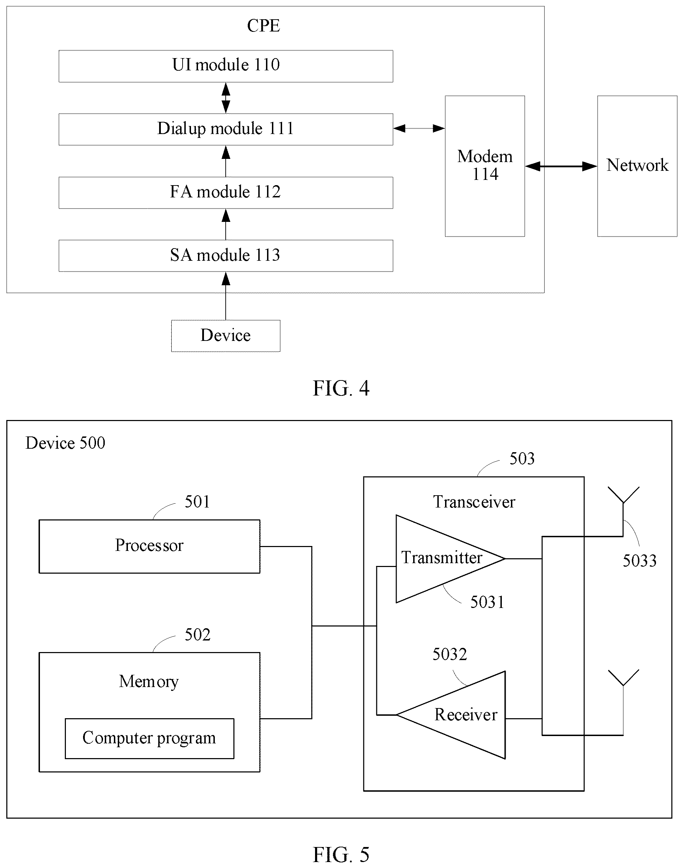

The data transmission method provided in embodiments of this application may be mainly applied to the CPE in the communication system described above. FIG. 4 is a diagram of a software architecture of CPE according to an embodiment of this application. As shown in FIG. 4, the CPE may include a user interface (user interface, UI) module 110, a dialup (dialup) module 111, a flow aware (flow aware, FA) module 112, a service aware (service aware, SA) module 113, and a modem (modem) 114.

The UI module 110 may be configured to provide a UI for a user, for example, provide a website user interface (website UI, web UI) and/or a CPE management interface in an application for the user. The user may perform a user operation on the UI provided by the UI module 110, to set a related function of the CPE. For example, in this embodiment of this application, the user may enable or disable a QoS control function of a service type on the UI provided by the UI module 110, and the UI module may record an enabled/disabled state of the QoS control function of the service type based on the user operation, so that the dialup module 111 can determine whether to perform subsequent steps based on the enabled/disabled state of the QoS control function of the service type, to perform QoS control on a service of the type.

The SA module 113 is configured to receive a service data packet from a device connected to the CPE, and identify a service type of the service data packet to obtain a service identification result. Then, the SA module 113 may send the service identification result and the service data packet to the FA module 112.

After receiving the service identification result sent by the SA module 113, the FA module 112 determines, based on the service identification result, whether the service data packet is a service data packet of a specified service type. For example, the specified service type may include a latency-first service type, a bandwidth-first service type, and the like. Using any service type like a first service type as an example, after determining that the service data packet is a data packet of the first service type, the FA module may obtain 5-tuple information of the service data packet, and send the 5-tuple information and the service identification result to the dialup module 111.

After receiving the service identification result and the 5-tuple information that are sent by the FA module 112, the dialup module 111 performs detection of whether a QoS control function corresponding to the first service type indicated by the service identification result is in an enabled state; and if the QoS control function is in the enabled state and a currently used APN is a first APN allocated to a service of the first service type, the dialup module 111 may instruct, by using an AT (attention) command, the modem 114 to determine, based on the 5-tuple information, a first dedicated bearer corresponding to the first APN.

After determining the first dedicated bearer, the modem 114 may send the service data packet to a cellular network on the first dedicated bearer.

It should be noted that division into modules in the CPE in the foregoing embodiments of this application is an example, and is merely logical function division. In actual implementation, there may be another division manner. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

If the integrated module is implemented in the form of a software functional module and sold or used as an independent product, the module may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device or a processor to perform all or some of the steps of the method described in embodiments of this application. The foregoing storage medium includes: any medium that can store program code, such as a USB flash drive, a removable hard disk, a read-only memory, a random access memory, a magnetic disk, or an optical disc.

In addition, functions implemented by the modules provided in the foregoing embodiments and the following method embodiments belong to a same concept. For a specific implementation process, refer to the method embodiments. Details are not described herein.

FIG. 5 is a diagram of a hardware structure of a device according to an embodiment of this application. The CPE shown in FIG. 1 to FIG. 4 may be implemented by using the device provided in FIG. 5. As shown in FIG. 5, the device 500 may include a processor 501, a memory 502, and a transceiver 503. The transceiver 503 includes a transmitter 5031, a receiver 5032, and an antenna 5033. The device structure shown in FIG. 5 does not constitute a limitation on the device. The device 500 may include more or fewer components than those shown in the figure, or combine some components, or have different component arrangements. This is not limited in this embodiment of this application. The following describes components of the device in detail with reference to FIG. 5.

The processor 501 is a control center of the device 500, and may be one processor or may be a collective name of a plurality of processing elements. For example, the processor 501 may be a general-purpose central processing unit (central processing unit, CPU), an application-specific integrated circuit (application-specific integrated circuit, ASIC), or one or more integrated circuits configured to control program execution of the solutions in this application, for example, one or more microprocessors (digital signal processors, DSP) or one or more field programmable gate arrays (field programmable gate arrays, FPGA). The processor 501 may perform various functions of the device 500 by running or executing a program stored in the memory 502 and invoking data stored in the memory 502. For example, in the various embodiments described below, actions of the CPE may be performed by the processor of the device 500 by invoking the data stored in the memory.

In an embodiment, the processor 501 may include one or more CPUs.

In an embodiment, the device 500 may include a plurality of processors. Each of the processors may be a single-core (single-CPU) processor, or may be a multi-core (multi-CPU) processor. The processor herein may be one or more devices, circuits, and/or processing cores configured to process data (for example, computer program instructions).

The memory 502 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage, a disk storage medium or another magnetic storage device, or any other medium that can be used to carry or store expected program code in a form of instructions or a data structure and that can be accessed by a device. However, the memory 502 is not limited thereto. The memory 502 may exist independently, and is connected to the processor 501 via a communication bus. Alternatively, the memory 502 may be integrated with the processor 501. The memory 502 is configured to store a software program for executing the solutions provided in embodiments of this application, and the processor 501 controls execution of the software program.

The transceiver 503 is configured to receive and send signals. The receiver 5032 may be configured to receive information sent by a RAN node through the antenna 5033, for example, receive downlink service data and transmission control information that are sent by a base station. The transmitter 5031 may be configured to send information to the RAN node through the antenna 5033. For example, the transmitter 5031 may send uplink service data, transmission feedback information, and the like to the base station through the antenna 5033.

It should be noted that the foregoing mainly describes a communication system to which the data transmission method is applied. In some possible implementations, the data transmission method provided in embodiments of this application may alternatively be applied to a communication system that does not include CPE, for example, may be applied to various devices that directly perform wireless communication with the RAN node in a mobile communication system. This is not limited in embodiments of this application. Next, the data transmission method provided in embodiments of this application is described mainly by using application of the data transmission method in the CPE as an example.

Before the data transmission method provided in embodiments of this application is described, some terms in embodiments of this application are first described.

### 1. APN

The APN indicates a PDN to be accessed by a device and an access mode of accessing the corresponding PDN. One APN may be used to establish one PDN connection.

### 2. Default bearer

One PDN connection corresponds to one default bearer. In a period in which the PDN connection exists, the default bearer remains established to guarantee that network services can be continuously provided for the device. The default bearer has no corresponding filter rule set.

### 3. Dedicated bearer

In the period in which the PDN connection exists, the dedicated bearer may be established to perform transmission of service data having a specific QoS requirement, to guarantee quality of service of a corresponding service. One dedicated bearer corresponds to one filter rule set, and the filter rule set is used for filtering service data packets, so that transmission of a service data packet that passes is performed on the dedicated bearer.

### 4. Filter rule set

The filter rule set may include at least one filter rule, where the at least one filter rule may include a rule for filtering uplink service data packets, or may include a rule for filtering downlink service data packets. Each filter rule may include 5-tuple information. When 5-tuple information of a service data packet matches 5-tuple information in a filter rule in the filter rule set, the service data packet may be mapped to a dedicated bearer corresponding to the filter rule set for transmission.

The filter rule set may be a traffic flow template (traffic flow template, TFT), a service data flow (service data flow, SDF) template, or a packet detection rule (packet detection rule, PDR).

### 5. QoS information

The QoS information indicates a QoS requirement of at least one service, and corresponds to a dedicated bearer. Transmission of service data of at least one service corresponding to same QoS information may be performed on a dedicated bearer corresponding to the QoS information.

Specifically, the QoS information may include a QoS parameter of the at least one service, and the QoS parameter may indicate a parameter condition that needs to be satisfied during transmission of the at least one service. For example, the QoS parameter may include a QoS class identifier (QoS class identifier, QCI) or a 5G QoS identifier (5G QoS identifier, 5QI), indicating a forwarding priority, latency, and a packet loss rate of service data. Optionally, the QoS information may further include a QoS flow identifier (QoS flow identifier, QFI), identifying a QoS flow indicated by the QoS information. A service data flow of at least one service corresponding to same QoS information may be referred to as a QoS flow.

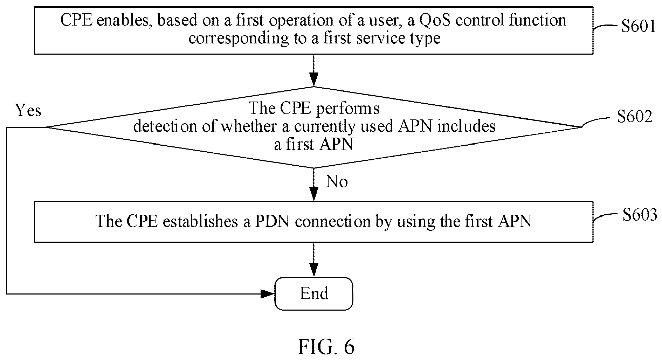

In embodiments of this application, a user may determine whether to perform QoS control on a service of a type. When the user determines to perform QoS control on a service of a type, the user may enable a QoS control function corresponding to the service type. Correspondingly, after receiving a data packet of the service of the type, the CPE may perform transmission of data of the service of the type on a dedicated bearer for a dedicated APN corresponding to the service type, to guarantee quality of service of the service of the type, achieve user-intention-based QoS guarantee, and improve user experience. Based on this, the following first describes a process in which the user enables a QoS control function of a service type. FIG. 6 shows an implementation process of enabling a QoS control function of a first service type according to an embodiment of this application. Refer to FIG. 6. The implementation process includes the following steps.

S601: CPE enables, based on a first operation of a user, the QoS control function corresponding to the first service type.

In some embodiments of this application, when detecting the first operation of the user, a device connected to the CPE may send a first instruction to the CPE. In response to the first instruction, the CPE enables the QoS control function corresponding to the first service type.

In a possible implementation, the device connected to the CPE may display a first interface provided by the CPE. In response to the first operation performed by the user on the first interface, the device may send the first instruction to the CPE. The first operation is an operation of enabling the QoS control function of the first service type. Correspondingly, the first instruction is an instruction that is triggered by the first operation and that instructs the CPE to enable the QoS control function of the first service type.

It should be noted that the first interface may include related information about a first service that is being run, and a service type of the first service is the first service type.

Specifically, the first service type may be a latency-first type, and latency-first means that a latency requirement is high. For example, the first service type may be game, and correspondingly, the first interface may be a battle interface of a game. For another example, if the first service type may be conference, the first interface may be a video conference interface. For another example, if the first service type may be real-time video, the first interface may be a video playing interface or the like. Optionally, the first service type may alternatively be a bandwidth-first type, and bandwidth-first means a bandwidth requirement is high. For example, the first service type may be data downloading, and correspondingly, the first interface may be a download interface.

In an example, the first interface may include an enabling option of the QoS control function. When the user wants to enable the QoS control function of the first service type, the user may click the enabling option. In response to a click operation on the enabling option, the device may display options of a plurality of service types, for the user to select the service type for which the user wants to enable the QoS control function. The options of the plurality of service types include an option of the first service type. Then, the user may click the option of the first service type. In response to a click operation of the user on the option of the first service type, the device sends the first instruction to the CPE. The first instruction includes an identifier of the first service type.

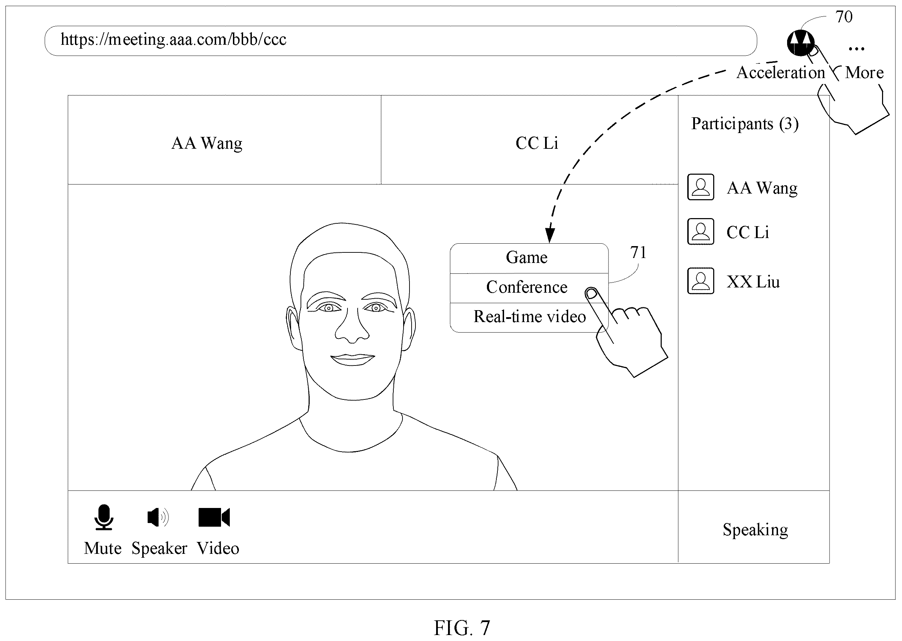

For example, refer to FIG. 7. The first interface is a conference interface, and an enabling option 70 of a QoS control function may be displayed on the conference interface. After the user clicks the enabling option 70 of the QoS control function, the device may display options 71 of service types for the user to select, including game, conference, and real-time video. The user may select the conference to indicate to enable a QoS control function of a conference service. Correspondingly, the device may send, to the CPE based on user selection, the first instruction including an identifier of the conference service.

In another example, the user may directly perform a preset gesture operation on the first interface, where the preset gesture operation indicates to enable a QoS control function of a service type corresponding to a service on the current interface. Based on this, after detecting the preset gesture operation, the device obtains the service type of the first service, that is, the first service type, based on the related information about the first service displayed on the first interface, and then the device sends the first instruction to the CPE. The first instruction includes an identifier of the first service type.

In another possible implementation, a CPE management application is installed on the device connected to the CPE, and the user may launch the CPE management application and enter a CPE setting interface. An enabling option of the QoS control function may be displayed on the CPE setting interface. When the user wants to enable the QoS control function of the first service type, the user may click the enabling option. After detecting a click operation on the enabling option of the QoS control function, the device may display options of a plurality of service types, for the user to select the service type for which the user wants to enable the QoS control function. Then, the user may click an option of the first service type. After detecting a click operation of the user on the option of the first service type, the device sends the first instruction to the CPE. The first instruction includes an identifier of the first service type.

After receiving the first instruction, the CPE may correspondingly store the identifier of the first service type and an enabled state identifier in a mapping relationship table of a service type identifier and a state identifier, to indicate that the QoS control function of the first service type is enabled.

In some other embodiments of this application, an enabling/disabling button of the QoS control function may be disposed on the CPE. In this case, the user may alternatively enable the QoS control function of the first service type directly by operating the enabling/disabling button of the QoS control function.

For example, enabling/disabling buttons of QoS control functions corresponding to different service types may be disposed on the CPE. The user may enable the QoS control function of the first service type by pressing an enabling/disabling button of the QoS control function of the first service type.

S602: The CPE performs detection of whether a currently used APN includes a first APN; and if the currently used APN does not include the first APN, the CPE performs S603, or if the currently used APN includes the first APN, the CPE ends the operation.

After enabling the QoS control function of the first service type, the CPE may perform detection of whether the currently used APN includes the first APN. The currently used APN is an APN for current successful dialing, in other words, an APN for current successful establishment of a PDN connection. It should be noted that there may be one or more currently used APNs. For example, when the CPE supports a single APN, there is one currently used APN. When the CPE supports a plurality of APNs, there may be one or more currently used APNs.

In addition, the first APN is an APN allocated to a service of the first service type, in other words, the first APN is an APN customized for the service of the first service type.

In this embodiment of this application, a service provider may provide, for some types of services that have special service requirements, APNs specially allocated to these service types. For example, the service provider may provide, for services such as games, conferences, and real-time videos that have high requirements on latency, APNs customized for corresponding service types. Based on this, an APN allocated to one or more service types may be preset in the CPE. After enabling the QoS control function of the first service type, the CPE may obtain the currently used APN, and obtain the first APN corresponding to the first service type. If the currently used APN does not include the first APN, the CPE may perform S603.

Optionally, if the currently used APN includes the first APN, it indicates that, currently, the CPE has successfully established a connection to a PDN identified by the first APN. In this case, the CPE may end the operation.

S603: The CPE establishes a PDN connection by using the first APN.

If determining that the currently used APN does not include the first APN, the CPE may perform dialing by using the first APN, to establish the PDN connection.

It should be noted that, in this embodiment of this application, the user may purchase an APN that is customized for one or more service types and that is provided by a service provider. Correspondingly, user subscription information stored in a core network element may include information about the APN purchased by the user. Based on this, when establishing the PDN connection by using the first APN, the CPE may send a PDN connection establishment request to the core network element, where the PDN connection establishment request may include the first APN and a user identifier of the CPE. After receiving the PDN connection establishment request, the core network element may obtain the user subscription information of the CPE based on the user identifier of the CPE, and then determine, based on the user subscription information of the CPE, whether the first APN is the APN already purchased by the user of the CPE. If the first APN is the APN already purchased by the user of the CPE, the core network element may allocate an IP address to the CPE, and establish the connection between the CPE and a PDN identified by the first APN, so that the CPE can access an external data network over the PDN connection.

Optionally, if determining that the first APN is not the APN already purchased by the user of the CPE, the core network element may refuse to accept the PDN connection establishment request, and return a connection establishment failure notification to the CPE. In this case, the CPE fails to establish the PDN connection by using the first APN.

In some possible cases, the CPE may support only a single APN, that is, the CPE supports, at any moment, establishing a connection to a PDN identified by one APN. Correspondingly, the CPE currently uses one APN. In this case, if the currently used APN is not the first APN, the CPE may enable an APN polling function when establishing the PDN connection by using the first APN. In this way, if the CPE fails to establish the PDN connection by using the first APN, the CPE may automatically switch to use an APN other than the first APN that is configured for the CPE to establish a PDN connection, to guarantee that, when the PDN connection corresponding to the first APN fails to be established, the CPE can still establish the PDN connection by using the another APN to obtain a network service.

In the foregoing embodiment, the first service type is mainly used as an example to describe an implementation in which the user enables the QoS control function of the first service type. For a QoS control function of another service type, the user may also enable the corresponding QoS control function by using the preceding method. For example, when the user wants to enable a QoS control function of a second service type, the user may perform a second operation. Based on the second operation, the CPE enables the QoS control function of the second service type, performs detection of whether the currently used APN includes a second APN allocated for the second service type, and if the currently used APN does not include the second APN, establish the PDN connection by using the second APN.

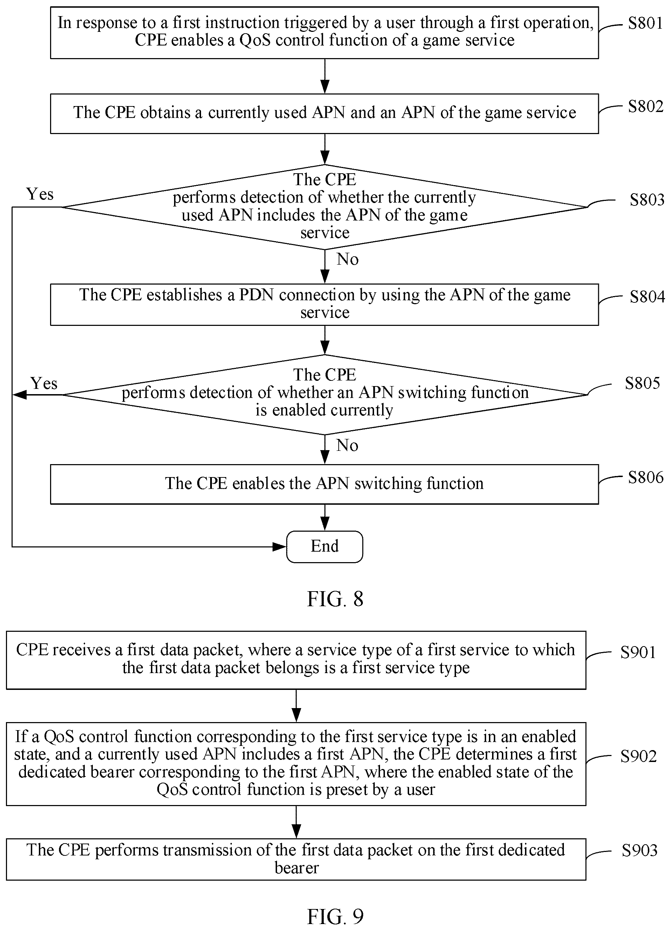

Based on the method for enabling a QoS control function of a service type described in the foregoing embodiment, the following uses an example in which a user enables a QoS control function of a game service. An embodiment of this application provides an example process. Refer to FIG. 8, the process includes the following steps.

S801: In response to a first instruction triggered by a user through a first operation, CPE enables a QoS control function of a game service.

The first operation may be an operation performed by the user on a device connected to the CPE to enable the QoS control function of the game service. Correspondingly, the first instruction instructs to enable the QoS control function of the game service.

S802: The CPE obtains a currently used APN and an APN of the game service.

S803: The CPE performs detection of whether the currently used APN includes the APN of the game service; and if the currently used APN does not include the APN of the game service, the CPE performs S804, or if the currently used APN includes the APN of the game service, the CPE ends the operation.

S804: The CPE establishes a PDN connection by using the APN of the game service.

This step may be performed simultaneously with S805. Alternatively, this step may be performed simultaneously with S806, or may be performed after S806 or after it is detected that an APN polling function is enabled currently.

S805: The CPE performs detection of whether the APN polling function is enabled currently; and if the APN polling function is not enabled currently, the CPE performs S806, or if the APN polling function is enabled currently, the CPE ends the operation.

S806: The CPE enables the APN polling function.

Based on the foregoing descriptions of setting the enabled/disabled state of a QoS control function of a service type by the user, after receiving a service data packet sent by a connected device, the CPE may perform transmission of the service data packet by using a process shown in FIG. 9. Refer to FIG. 9. The process may include the following steps.

S901: CPE receives a first data packet, where a service type of a first service to which the first data packet belongs is a first service type.

In this embodiment of this application, the CPE may receive a data packet sent by each device connected to the CPE, and perform service identification on the received data packet, to obtain a service identification result. The service identification result may include a service type of a service to which the data packet belongs.

In an example in which a service that is being run on a device is the first service of the first service type, the device may send the first data packet to the CPE. After receiving the first data packet, the CPE may perform service identification on the first data packet, to determine that the service type of the first service to which the first data packet belongs is the first service type.

For example, a device is running a game, and the device may send a data packet of the game to the CPE. After receiving the data packet, the CPE may perform identification on the data packet, to determine that the data packet is the data packet of the game service.

S902: If a QoS control function corresponding to the first service type is in an enabled state, and a currently used APN includes a first APN, the CPE determines a first dedicated bearer corresponding to the first APN, where the enabled state of the QoS control function is preset by a user.

After determining that the first data packet is the data packet of the service of the first service type, the CPE may perform detection of whether the QoS control function of the first service type is in the enabled state.

It can be learned from the descriptions in the foregoing embodiments that, when enabling a QoS control function of a service type based on a user operation, the CPE may correspondingly store an identifier of a corresponding service type and an enabled-state identifier of the QoS control function in a mapping relationship table of a service type identifier and a state identifier. Based on this, in this embodiment of this application, the CPE may search the mapping relationship table for a state identifier corresponding to an identifier of the first service type. If the state identifier corresponding to the identifier of the first service type is the enabled-state identifier, the CPE may determine that the QoS control function of the first service type is in the enabled state. If the state identifier corresponding to the identifier of the first service type is a disabled-state identifier, the CPE may determine that the QoS control function of the first service type is in a disabled state.

When the QoS control function of the first service type is in the disabled state, it indicates that the user does not want to perform, on the service of the first service type, a QoS control process provided in this embodiment of this application. In this case, the CPE may send the first data packet on a default bearer corresponding to the currently used APN.

When the QoS control function of the first service type is in the enabled state, it indicates that the user wants to perform, on the service of the first service type, the QoS control process provided in this embodiment of this application. Based on this, the CPE may obtain the currently used APN, and perform detection of whether the currently used APN includes the first APN.

It can be learned from the descriptions in the foregoing embodiments that, after the user chooses to enable the QoS control function of the first service type, the CPE may establish a PDN connection by using the first APN. Based on this, when the QoS control function of the first service type is in the enabled state, if the currently used APN does not include the first APN, it indicates that the CPE fails to establish the PDN connection by using the first APN during enabling of the QoS control function of the first service type. In this case, the CPE may send the first data packet on the default bearer corresponding to the currently used APN.

When the QoS control function of the first service type is in the enabled state, if the currently used APN includes the first APN, it indicates that the PDN connection to a PDN identified by the first APN is successfully established currently. Based on this, the CPE may determine the first dedicated bearer corresponding to the first APN, to perform transmission of the first data packet on the first dedicated bearer, thereby guaranteeing a requirement of the first service and improve user experience.

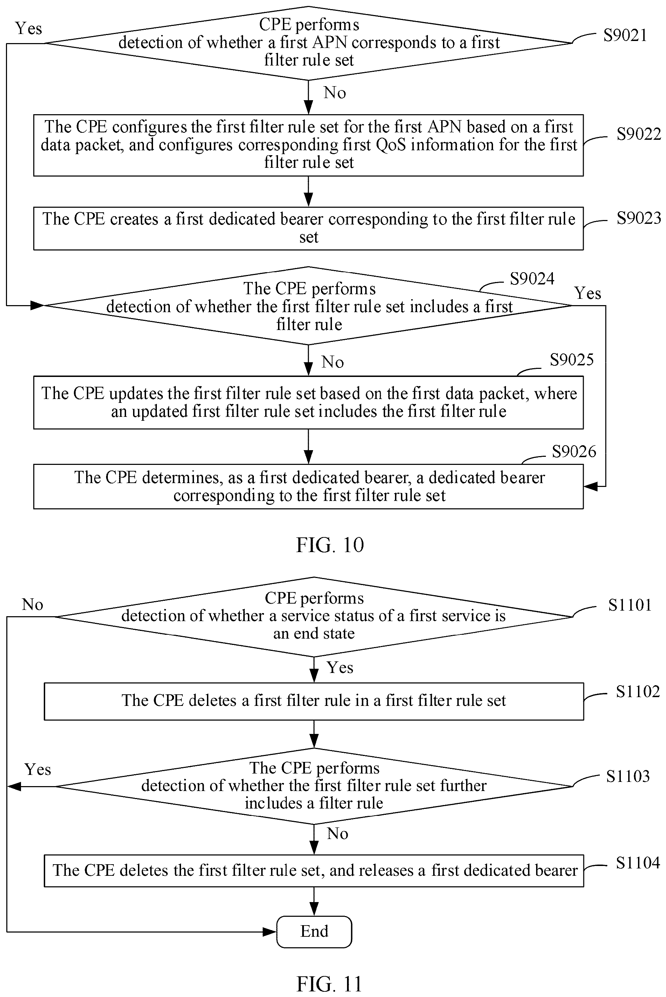

Specifically, in some examples, refer to FIG. 10. An implementation process in which the CPE determines the first dedicated bearer corresponding to the first APN may include the following steps.

S9021: The CPE performs detection of whether the first APN corresponds to a first filter rule set; and if the first APN does not correspond to the first filter rule set, the CPE performs S9022 and S9023, or if the first APN corresponds to the first filter rule set, the CPE performs S9024.

It can be learned from the foregoing descriptions that a PDN connection corresponding to one APN corresponds to one default bearer. In addition, in a period in which the PDN connection exists, one or more dedicated bearers may be established to perform transmission of a data packet of a service having a special QoS requirement. One dedicated bearer may correspond to one filter rule set, and the default bearer does not correspond to any filter rule set. Based on this, in this embodiment of this application, when having successfully established the PDN connection by using the first APN, the CPE may determine, by performing detection of whether the first APN corresponds to the first filter rule set, whether a dedicated bearer used for performing transmission of the first data packet exists in a bearer corresponding to the first APN. The bearer corresponding to the first APN is a bearer corresponding to the PDN connection corresponding to the first APN.

In a possible case, various services of the first service type have a same QoS requirement, and transmission may be performed by establishing one dedicated bearer. For example, when the first service type is game, transmission of service data of various games may be performed by establishing one dedicated bearer. Based on this, because the first APN is allocated for the first service type, the dedicated bearer corresponding to the first APN is actually used for performing transmission of the service of the first service type. In this case, the first APN corresponds to at most one dedicated bearer, and correspondingly, the first APN corresponds to at most one filter rule set corresponding to the dedicated bearer. Based on this, the CPE may search for a filter rule set corresponding to the first APN, and if the filter rule set corresponding to the first APN is not found, the CPE determines that the first APN does not correspond to the first filter rule set. If the filter rule set corresponding to the first APN is found, the CPE determines that the first APN corresponds to the first filter rule set. In this case, the first filter rule set is a filter rule set used for enabling a data packet of each service of the first service type to pass.

It should be noted that the default bearer corresponding to the APN may be indicated by using a primary connection identifier (connection identifier, CID), and the dedicated bearer corresponding to the APN may be indicated by using a secondary CID associated with the primary CID. Based on this, the CPE may store a mapping relationship between the APN and the primary CID. The CPE may obtain, from the mapping relationship, a primary CID corresponding to the first APN, to check whether a secondary CID associated with the primary CID corresponding to the first APN exists. If the associated secondary CID does not exist, it indicates that the first APN has no corresponding dedicated bearer, and therefore the corresponding filter rule set does not exist. If the secondary CID associated with the primary CID corresponding to the first APN exists, it indicates that the dedicated bearer corresponding to the first APN exists, that is, the first APN corresponds to a filter rule set.

In another possible case, the various services of the first service type each have a different QoS requirement. In this way, transmission of different services may be performed on different dedicated bearers. For example, when the first service type is game, a game A and a game B have different QoS requirements, and transmission of service data of the game A and the game B may be performed on different dedicated bearers corresponding to the first APN. In this case, dedicated bearers used for bearing different services correspond to different filter rule sets. Therefore, the first filter rule set may be a filter rule set corresponding to the first service. Based on this, the CPE may first search for the filter rule set corresponding to the first APN. If the filter rule set corresponding to the first APN is not found, the CPE determines that the first APN does not correspond to the first filter rule set. If the filter rule set corresponding to the first APN is found, the CPE may further search the filter rule set corresponding to the first APN for the filter rule set corresponding to the first service. If the filter rule set corresponding to the first service is not found, the CPE determines that the first APN does not correspond to the first filter rule set. If the filter rule set corresponding to the first service is found, the CPE determines that the first APN corresponds to the first filter rule set.

It should be noted that, in this case, the CPE may search for the filter rule set corresponding to the first APN with reference to the foregoing described implementation. In addition, the filter rule set may further correspond to a service identifier, where the service identifier uniquely identifies one service. For example, the service identifier may be an identifier of an application used for implementing a service. For example, a service identifier of a game may be an application identifier of the game. Based on this, in this embodiment of this application, after finding the filter rule set corresponding to the first APN, the CPE may obtain a service identifier of the first service, and search, based on the service identifier of the first service, the filter rule set corresponding to the first APN for the filter rule set corresponding to the first service.

S9022: The CPE configures the first filter rule set for the first APN based on the first data packet, and configures corresponding first QoS information for the first filter rule set.

If the first APN does not correspond to the first filter rule set, it indicates that a dedicated bearer used for bearing the first service does not exist in the bearer corresponding to the first APN. In this case, the CPE may configure the first filter rule set for the first APN based on the first data packet, and configure the first QoS information for the first filter rule set.

In some embodiments, when the various services of the first service type have a same QoS requirement, and transmission is performed on one dedicated bearer, if the first APN does not correspond to the first filter rule set, it indicates that the dedicated bearer corresponding to the first APN is not currently established. In this case, the CPE may extract 5-tuple information from the first data packet, use the 5-tuple information as a first filter rule, and generate the first filter rule set based on the first filter rule. In addition, the CPE may further obtain the first QoS information indicating a QoS requirement of each service of the first service type. Then, the CPE creates and stores a mapping relationship among the first APN, the first filter rule set, and the first QoS information. The first filter rule set includes the first filter rule. The first QoS information may include a QoS parameter of each service of the first service type.

It should be noted that, it can be learned from the foregoing descriptions that the default bearer corresponding to the APN may be indicated by using the primary CID, the dedicated bearer may be indicated by using the secondary CID, and the secondary CID of the dedicated bearer may be associated with the primary CID. Based on this, in this embodiment of this application, when creating the mapping relationship among the first APN, the first filter rule set, and the first QoS information, the CPE may first generate a first secondary CID to indicate a to-be-created first dedicated bearer, and establish a mapping relationship between the primary CID corresponding to the first APN and the first secondary CID, to indicate that the dedicated bearer indicated by the first secondary CID is the dedicated bearer corresponding to the first APN. Based on this, the CPE may establish a mapping relationship among the first secondary CID and the first filter rule set and the first QoS information, to indicate that the first filter rule set and the first QoS information correspond to the dedicated bearer corresponding to the first APN. In this way, the mapping relationship among the first APN, the first filter rule set, and the first QoS information may include a first mapping relationship among the first APN, the primary CID of the first APN, and the first secondary CID, and a second mapping relationship among the first secondary CID, the first filter rule set, and the first QoS information.

In some other embodiments, when the various services of the first service type each have a different QoS requirement, and transmission is performed on different dedicated bearers, if the first APN does not correspond to the first filter rule set, it indicates that the bearer corresponding to the first APN does not include the dedicated bearer used for bearing the first service. In this case, the CPE may extract 5-tuple information from the first data packet, use the 5-tuple information as a first filter rule, and generate the first filter rule set based on the first filter rule. In addition, the CPE may further obtain the first QoS information indicating a QoS requirement of the first service. Then, the CPE creates and stores a mapping relationship among the first APN, the service identifier of the first service, the first filter rule set, and the first QoS information. The first filter rule set includes the first filter rule. The first QoS information includes a QoS parameter of the first service.

It should be noted that, in this embodiment, when creating the mapping relationship among the first APN, the service identifier of the first service, the first filter rule set, and the first QoS information, the CPE may create the first mapping relationship with reference to the foregoing method, and establish a third mapping relationship among the first secondary CID, the service identifier of the first service, the first filter rule set, and the first QoS information. Correspondingly, the mapping relationship among the first APN, the service identifier of the first service, the first filter rule set, and the first QoS information may include the first mapping relationship and the third mapping relationship. In comparison with the second mapping relationship, the service identifier of the first service is added to the third mapping relationship.

S9023: The CPE creates the first dedicated bearer corresponding to the first filter rule set.

After configuring the first filter rule set for the first APN, the CPE may further request a network device for creating the first dedicated bearer, and establish a mapping relationship between the first dedicated bearer and the first filter rule set. The first dedicated bearer is the dedicated bearer used for bearing the first service.

Specifically, the CPE may send a dedicated-bearer resource allocation request to the network device, to request the network device to allocate a resource to the to-be-created first dedicated bearer. The dedicated-bearer resource allocation request includes the first APN, the first filter rule set, and the first QoS information. After receiving the dedicated-bearer resource allocation request, the network device may allocate a network resource to the first dedicated bearer, and send dedicated-bearer configuration information to the CPE. After receiving the dedicated-bearer configuration information from the network device, the CPE may activate the first dedicated bearer based on the dedicated-bearer configuration information.

In an example, the CPE may send the dedicated-bearer resource allocation request to a base station, and the base station may include information in the dedicated-bearer resource allocation request in a dedicated-bearer resource command and send the dedicated-bearer resource command to a core network element. After receiving the dedicated-bearer resource command, the core network element may establish an S5 or S8 bearer in the first dedicated bearer, and establish a mapping relationship among the S5 or S8 bearer, the first filter rule set, and the first QoS information. Then, the core network element may send a bearer creation request to the base station. After receiving the bearer creation request, the base station creates an evolved radio access bearer (evolved radio access bearer, E-RAB) corresponding to the S5 or S8 bearer in the first dedicated bearer, and establishes a mapping relationship between the E-RAB and the first QoS information. Then, the base station may send dedicated-bearer configuration information to the CPE, where the dedicated-bearer configuration information may be carried by using a radio resource control (radio resource control, RRC) connection configuration. In addition, the dedicated-bearer configuration information may include configuration parameters corresponding to a plurality of protocol layer entities corresponding to the first dedicated bearer, an identifier of the E-RAB included in the first dedicated bearer, and an identifier of the S5 or S8 bearer. Optionally, the dedicated-bearer configuration information may further include the first QoS information and the first filter rule set. After receiving the dedicated-bearer configuration information, the CPE creates, based on the configuration parameters corresponding to the plurality of protocol layer entities corresponding to the first dedicated bearer, the plurality of protocol layer entities corresponding to the first dedicated bearer, and establishes a mapping relationship between the identifier of the E-RAB included in the first dedicated bearer and the first filter rule set, to activate the first dedicated bearer.

S9024: The CPE performs detection of whether the first filter rule set includes the first filter rule; and if the first filter rule set does not include the first filter rule, the CPE performs S9025 and S9026, or if the first filter rule set includes the first filter rule, the CPE performs S9026.

If, in S9021, the CPE determines that the first APN corresponds to the first filter rule set, it indicates that the bearer corresponding to the first APN includes the dedicated bearer used for bearing the first service, that is, the first dedicated bearer has been successfully established. In this case, the CPE may further perform detection of whether the first filter rule set includes the first filter rule, that is, perform detection of whether the first filter rule set includes a filter rule that can be for mapping, to the first dedicated bearer for transmission, a data packet that has same 5-tuple information as the first data packet.

S9025: The CPE updates the first filter rule set based on the first data packet, where an updated first filter rule set includes the first filter rule.

If the first filter rule set does not include the first filter rule, the CPE may generate the first filter rule based on the 5-tuple information in the first data packet, and add the first filter rule to the first filter rule set, to obtain the updated first filter rule set.

S9026: The CPE determines, as the first dedicated bearer, a dedicated bearer corresponding to the first filter rule set.

It can be learned from the foregoing descriptions that, during creation of the first dedicated bearer, the CPE establishes the mapping relationship between the first dedicated bearer and the first filter rule set. Based on this, the CPE may directly determine, based on the foregoing established mapping relationship, the first dedicated bearer corresponding to the first filter rule set.

For example, the CPE stores the second mapping relationship or the third mapping relationship. Based on this, the CPE may obtain, from the second mapping relationship or the third mapping relationship, the first secondary CID corresponding to the first filter rule set, and then determine the first dedicated bearer based on the first secondary CID.

S903: The CPE performs transmission of the first data packet on the first dedicated bearer.

After determining the first dedicated bearer, the CPE may use the first dedicated bearer to perform transmission of the first data packet, to guarantee quality of service of the first service to which the first data packet belongs.

In some embodiments, it can be learned from the foregoing descriptions that the CPE stores the mapping relationship between the first dedicated bearer and the first QoS information. Based on this, the CPE may obtain a QCI, a 5QI, or a QFI from the first QoS information, and include the QCI, the 5QI, or the QFI in the first data packet, to identify that the first data packet is service data having a QoS requirement indicated by the first QoS information. Then, the CPE may send, to a RAN node on the first dedicated bearer, the first data packet carrying the QCI, the 5QI, or the QFI. After receiving the first data packet, the RAN node may obtain a corresponding QoS parameter based on the QCI, the 5QI, or the QFI carried in the first data packet, and then schedule a resource based on the QoS parameter to forward the first data packet to the core network element, to implement QoS control on the first service to which the first data packet belongs.

Optionally, if the RAN node is a base station in a non-standalone scenario, the base station may further determine, in advance based on the first QoS information associated with the first dedicated bearer, a transmission policy of the service data borne on the first dedicated bearer, and send, to the CPE, indication information indicating the transmission policy. The transmission policy may be performing transmission via a base station in a 5G communication system, performing transmission via a base station in a 4G communication system, or performing spilt transmission via base stations in a 4G communication system and a 5G communication system. Correspondingly, when performing transmission of the service data on the first dedicated bearer, the CPE may further determine, based on the transmission policy, a base station in a specific communication system to which the service data is sent.

In this embodiment of this application, when the CPE receives the data packet of the service of the first service type, if the QoS control function corresponding to the first service type is already set by the user to the enabled state, and the currently used APN is the first APN allocated for the first service type, the CPE may determine the first dedicated bearer corresponding to the first APN, and perform transmission of the data packet on the first dedicated bearer. It can be learned that, in this embodiment of this application, the user may determine whether to perform QoS control on a service of a type. When the user determines to perform QoS control on a service of a service type, the CPE may perform transmission of data of the service of the service type on a dedicated bearer for a dedicated APN corresponding to the service type, to guarantee quality of service of the service of the service type, achieve user-intention-based QoS guarantee, and improve user experience.

In the foregoing embodiment, the first service type is mainly used as an example to describe an implementation process of performing transmission of the data packet of the service of the first service type. Optionally, for another service type, like a second service type, after the CPE receives a second data packet belonging to a second service of the second service type, if a QoS control function corresponding to the second service type is in the enabled state, and a currently used APN includes a second APN, the CPE may determine a second dedicated bearer corresponding to the second APN. The second APN is an APN allocated to a service of the second service type. Then, the CPE may perform transmission of the second data packet on the second dedicated bearer. For a specific implementation, refer to the foregoing embodiment. Details are not described herein again.

The foregoing embodiment mainly describes a process in which the CPE performs, when receiving a data packet of a service of a specified service type, transmission of the corresponding service data packet on a dedicated bearer for an APN corresponding to the corresponding service type. Based on this, the CPE may further release the corresponding dedicated bearer after detecting that the service of the specified service type ends. For example, the first service type is still used as an example. For a process in which CPE releases the dedicated bearer after the first data packet of the first service is sent, refer to FIG. 11. The process may include the following steps.

S1101: CPE performs detection of whether a service status of a first service is in an end state; and if the service status of the first service is the end state, the CPE performs S1102 and S1103, or if the service status of the first service is not the end state, the CPE ends the operation.

In this embodiment of this application, after the CPE sends a first data packet, if the CPE receives, within preset duration, no other data packet belonging to the first service, the CPE may determine that the service status of the first service is the end state. In this case, a first filter rule that is in a first filter rule set corresponding to a first dedicated bearer and that is used for causing a data packet of the first service to pass is temporarily not used. Therefore, the CPE may perform S1102.

S1102: The CPE deletes the first filter rule in the first filter rule set.

S1103: The CPE performs detection of whether the first filter rule set further includes a filter rule; and if the first filter rule set further includes a filter rule, the CPE ends the operation, or if the first filter rule set includes no filter rule, the CPE performs S1104.

If the first filter rule set is a filter rule set corresponding to various services of a first service type, the first filter rule set not only includes the first filter rule used for causing the data packet of the first service to pass, but may also include another filter rule used for causing a data packet of another service of the first service type to pass. It is clear that the first filter rule set may alternatively include no other filter rules. Based on this, after the first filter rule is deleted, the first filter rule set may not be empty or may be empty. Based on this, if the first filter rule set is not empty, it indicates that another service of the first service type does not end yet, and the first dedicated bearer needs to be used to perform transmission of data. In this case, the CPE may end the operation. If the first filter rule set is empty, it indicates that each service of the first service type end currently. In this case, the CPE may perform S1104.

If the first filter rule set is a filter rule set corresponding to the first service, the first filter rule set includes only the first filter rule. In this case, after the first filter rule is deleted, the first filter rule set is empty, and the CPE may perform S1104.

S1104: The CPE deletes the first filter rule set, and releases the first dedicated bearer.

After deleting the first filter rule set, the CPE may delete a mapping relationship among a first APN, the first filter rule set, and first QoS information, and delete a mapping relationship between the first filter rule set and the first dedicated bearer. Then, the CPE may request the network device for releasing the first dedicated bearer.

In this embodiment of this application, after the service of the first service type ends, the CPE may release the dedicated bearer used for bearing the service of the first service type, to reduce occupied resources and improve resource utilization.

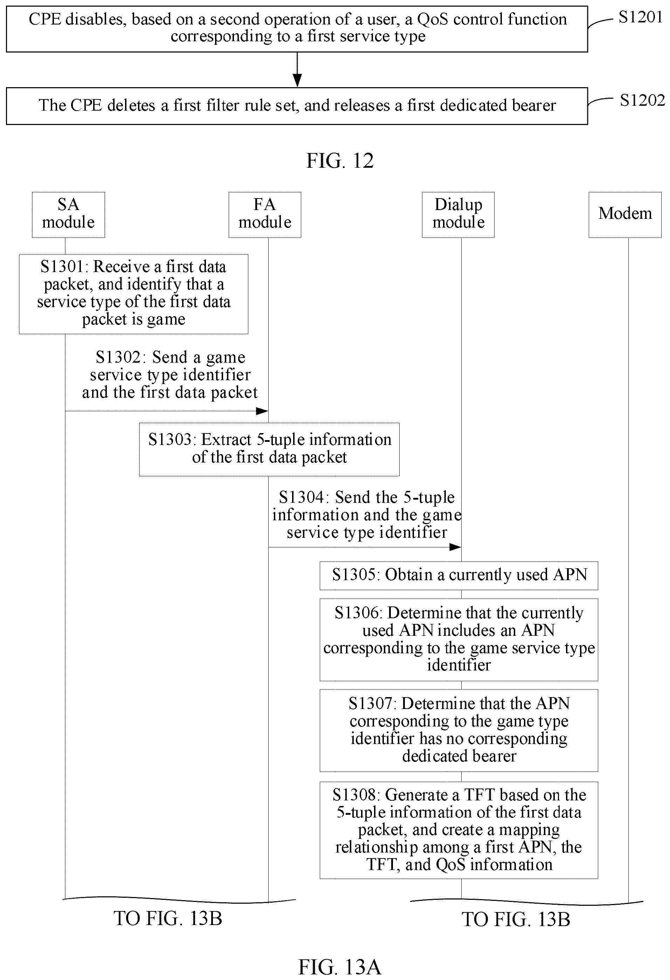

The foregoing embodiment mainly describes a case in which a dedicated bearer is released after a service of a type ends. In some other possible cases, if it is detected that the QoS control function corresponding to the first service type is disabled, the CPE may also delete the first filter rule set, and release the first dedicated bearer. For example, refer to FIG. 12. The process may include the following steps.

S1201: CPE disables, based on a second operation of a user, a QoS control function corresponding to a first service type.

For example, the user may perform the second operation on a device connected to the CPE, where the second operation is an operation of disabling the QoS control function of the first service type. After detecting the second operation, the device sends a second instruction to the CPE, to instruct to disable the QoS control function corresponding to the first service type. After receiving the second instruction, the CPE disables the QoS control function corresponding to a second service type. For an implementation in which the device performs detection of the second operation and sends the second instruction, refer to the implementation in which the device performs detection of the first operation and sends the first instruction described in S601. Details are not described herein again.

Optionally, for example, enabling/disabling buttons of QoS control functions corresponding to different service types may be disposed on the CPE. The user may disable the QoS control function of the first service type by pressing an enabling/disabling button of the QoS control function of the first service type.

When disabling the QoS control function corresponding to the first service type, the CPE may modify, to a disabled-state identifier, an enabled-state identifier corresponding to an identifier of the first service type in a mapping relationship table of a service type identifier and a state identifier.

S1202: The CPE deletes a first filter rule set, and releases a first dedicated bearer.

After disabling the QoS control function corresponding to the first service type, the CPE may delete the first filter rule set and release the first dedicated bearer with reference to the implementation of S1104.

In this embodiment of this application, the CPE may disable the QoS control function of the first service type based on user intention, to release the corresponding first dedicated bearer, thereby improving user experience.

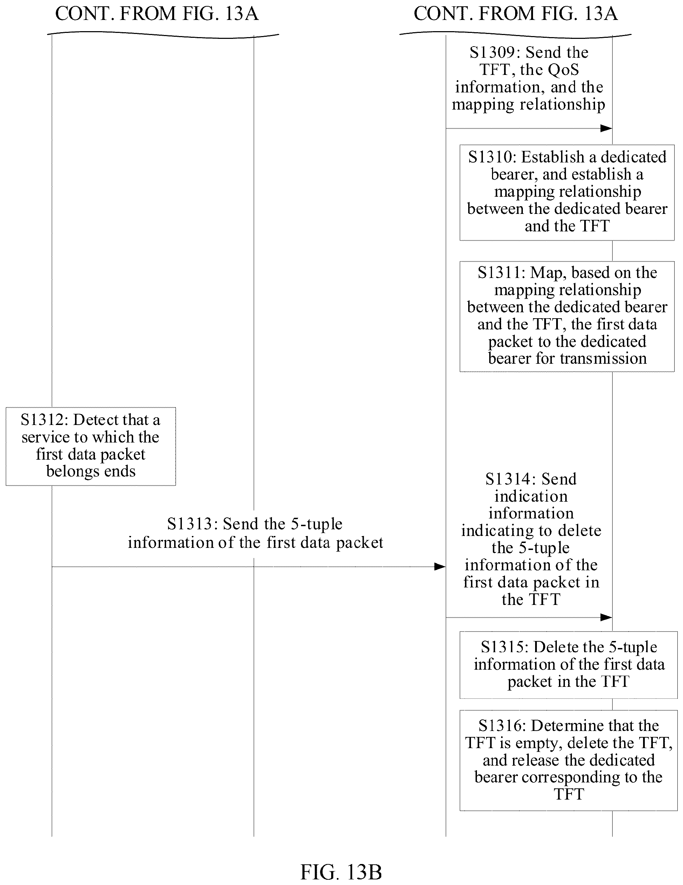

Based on the data transmission method described in the foregoing embodiments and with reference to the software architecture of the CPE shown in FIG. 4, an embodiment of this application further provides, using a game service as an example, an example process in which modules in the CPE interacts with each other to implement data transmission of the game service. Refer to FIG. 13A and FIG. 13B. The process may include the following steps.

S1301: An SA module receives a first data packet, and identifies that a service type of the first data packet is game.

Optionally, the SA module may further determine a service status of the game service depending on whether a data packet of the game service is received within preset duration before a current moment. If the data packet of the game service is not received within the preset duration before the current moment, it is determined that the service status of the game service is a start state. If the data packet of the game service is received within the preset duration before the current moment, it is determined that the service status of the game service is running.

S1302: The SA module sends a game service type identifier and the first data packet to an FA module.

The SA module may send the game service type identifier and the first data packet to the FA module through a netlink. The netlink is a communication mode mainly used for communication between a kernel process and a user process. In addition, the netlink may also be used for communication between two user processes. In this embodiment of this application, the SA module may be located in kernel space, and the FA module is located in user space. Therefore, the SA module may communicate with the FA module through the netlink.

In an example, a dialup module may subscribe to flow information of the game service from the FA module in advance by using a subscription instruction. After receiving subscription information, the FA module may write the subscription information into the kernel. Based on this, after receiving the first data packet and identifying that the first data packet is the data packet of the game service, the SA module determines, based on the subscription information, that the first data packet includes the flow information subscribed by the dialup module. Therefore, the SA module may send 5-tuple information and the game service type identifier to the FA module.

Optionally, the SA module may further send, to the FA module, an identifier indicating the service status of the game service.

S1303: The FA module extracts 5-tuple information of the first data packet.

The FA module may further cache the 5-tuple information of the first data packet and an identifier of a corresponding service status.

S1304: The FA module sends the 5-tuple information and the game service type identifier to the dialup module.

S1305: The dialup module obtains a currently used APN.

S1306: The dialup module determines that the currently used APN includes an APN corresponding to the game service type identifier.

S1307: The dialup module determines that the APN corresponding to the game type identifier has no corresponding dedicated bearer.

S1308: The dialup module generates a TFT based on the 5-tuple information of the first data packet, and creates a mapping relationship among a first APN, the TFT, and QoS information.

S1309: The dialup module sends the TFT, the QoS information, and the mapping relationship to a modem.

S1310: The modem establishes a dedicated bearer, and establishes a mapping relationship between the dedicated bearer and the TFT.

S1311: The modem maps, based on the mapping relationship between the dedicated bearer and the TFT, the first data packet to the dedicated bearer for transmission.

S1312: The SA module detects that the service to which the first data packet belongs ends.

S1313: The SA module sends the 5-tuple information of the first data packet to the dialup module through the FA module.

S1314: The dialup module sends, to the modem, indication information indicating to delete the 5-tuple information of the first data packet in the TFT.

S1315: The modem deletes the 5-tuple information of the first data packet in the TFT.

S1316: The modem determines that the TFT is empty, deletes the TFT, and releases the dedicated bearer corresponding to the TFT.

It should be noted that, for implementations of the steps performed by the foregoing modules, refer to related implementations in the foregoing embodiments. Details are not described herein again.

All or some of the foregoing embodiments may be implemented by using software, hardware, firmware, or any combination thereof. When software is used to implement embodiments, all or some of embodiments may be implemented in a form of program product. The program product includes one or more instructions. When the instructions are loaded and executed on a device, all or some of the procedures or functions according to embodiments of this application are generated. The instructions may be stored in a readable storage medium, or transmission of the instructions from one readable storage medium to another readable storage medium may be performed.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof. In embodiments of this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In text descriptions of embodiments of this application, a character "/" usually indicates an "or" relationship between associated objects. In this application, "first", "second", and various numbers are merely used for differentiation for ease of description, and are not used to limit the scope of embodiments of this application. For example, numbers are used to distinguish between different messages but not to describe a specific order or sequence.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, applied to a device, wherein the method comprises:
receiving a first data packet, wherein a service type of a first service to which the first data packet belongs is a first service type;
if a quality of service QoS control function corresponding to the first service type is in an enabled state, and a currently used access point name APN comprises a first APN, determining a first dedicated bearer corresponding to the first APN, wherein the first APN is an APN allocated to a service of the first service type, and the enabled state of the QoS control function is preset by a user; and
performing transmission of the first data packet on the first dedicated bearer.

2. The method according to claim 1, wherein before the receiving the first data packet, the method further comprises:
when detecting that the QoS control function corresponding to the first service type is enabled, performing detection of whether the currently used APN comprises the first APN; and
if the currently used APN does not comprise the first APN, establishing a PDN connection by using the first APN.

3. The method according to claim 1 or 2, wherein the determining the first dedicated bearer corresponding to the first APN comprises:
if the first APN corresponds to a first filter rule set, performing detection of whether the first filter rule set comprises a first filter rule, wherein the first filter rule is used for causing the first data packet to pass, and the first filter rule set corresponds to a dedicated bearer; and
if the first filter rule set comprises the first filter rule, determining, as the first dedicated bearer, the dedicated bearer corresponding to the first filter rule set.

4. The method according to claim 3, wherein the method further comprises:
if the first filter rule set does not comprise the first filter rule, updating the first filter rule set based on the first data packet, wherein an updated first filter rule set comprises the first filter rule; and
determining, as the first dedicated bearer, the dedicated bearer corresponding to the first filter rule set.

5. The method according to claim 1 or 2, wherein the determining the first dedicated bearer corresponding to the first APN comprises:
if the first APN does not correspond to a first filter rule set, configuring the first filter rule set for the first APN based on the first data packet, and configuring corresponding first QoS information for the first filter rule set, wherein the first filter rule set comprises a first filter rule, the first filter rule is used for causing the first data packet to pass, and the first QoS information comprises a QoS parameter of the service of the first service type; and
creating the first dedicated bearer corresponding to the first filter rule set.

6. The method according to claim 5, wherein the creating the first dedicated bearer corresponding to the first filter rule set comprises:
sending a dedicated-bearer resource allocation request to a network device, wherein the dedicated-bearer resource allocation request comprises the first APN, the first filter rule set, and the first QoS information;
receiving dedicated-bearer configuration information from the network device; and
activating the first dedicated bearer based on the dedicated-bearer configuration information.

7. The method according to any one of claims 3 to 6, wherein the method further comprises:
if detecting that a service status of the first service is an end state, deleting the first filter rule in the first filter rule set.

8. The method according to claim 7, wherein the method further comprises:
if the first filter rule set comprises no filter rule, deleting the first filter rule set, and releasing the first dedicated bearer.

9. The method according to any one of claims 3 to 6, wherein the method further comprises:
when detecting that the QoS control function corresponding to the first service type is disabled, deleting the first filter rule set, and releasing the first dedicated bearer.

10. The method according to any one of claims 1 to 9, wherein the method further comprises:
receiving a second data packet, wherein a service type of a second service to which the second data packet belongs is a second service type, and the second service type is different from the first service type;
if a QoS control function corresponding to the second service type is in an enabled state, and a currently used APN comprises a second APN, determining a second dedicated bearer corresponding to the second APN, wherein the second APN is an APN allocated to a service of the second service type; and
performing transmission of the second data packet on the second dedicated bearer.

11. A device, wherein the device comprises a processor, and the processor is configured to execute at least one program instruction or code stored in a memory, to implement the data transmission method according to any one of claims 1 to 10.

12. A readable storage medium, wherein the readable storage medium stores instructions, and when the instructions are run on a device, the device is caused to perform the data transmission method according to any one of claims 1 to 10.

13. A program product comprising instructions, wherein when the instructions are run by a device, the device is caused to perform the data transmission method according to any one of claims 1 to 10.
